# FASCICULE DE BREVET EUROPEEN

(11) **EP 0 589 771 B1**
(45) Date de publication et mention de la délivrance du brevet: **16.08.2000**
(21) Numéro de dépôt: 93402292.2
(22) Date de dépôt: 20.09.1993
(51) Int. Cl.: G06K 19/077

(54) **Dispositif de fabrication de cartes à puces**
Herstellungsvorrichtung für Chipkarten
Chip cards manufacturing device

(30) Priorité: 22.09.1992 FR 9211430
(43) Date de publication de la demande: 30.03.1994
(73) Titulaire: GILLES LEROUX S.A., F-45470 Loury (FR)
(72) Inventeur: Nioche, Gérard, F-45370 Clery Saint Andre (FR); Perdoux, Dominique, F-45660 Mardie (FR); Baudron, Patrick, F-45760 Boigny sur Bionne (FR)
(74) Mandataire: Debay, Yves

(56) Documents cités:
- EP-A- 0 197 364
- EP-A- 0 197 847
- EP-A- 0 208 891
- EP-A- 0 418 759
- WO-A-88/08171
- FR-A- 2 624 999

## Description

La présente invention a pour objet un dispositif permettant le fraisage de cavités dans des cartes en matière plastique, communément appelées "cartes à puces", et l'encartage de circuits intégrés dans lesdites cavités.

Les cartes à microcircuits sont généralement des cartes de chlorure de polyvinyle imprimés et munies d'un logement dans lequel est implanté un circuit intégré ou "puce" électronique.

Le document EP-A-197847, qui concerne un procédé de fabrication de cartes à mémoire électronique, cite un procédé d'implantation connu, on part d'un corps de carte déjà réalisé et on usine dans le corps de la carte une cavité pour venir y placer et y coller un module électronique. Le document mentionné egalement l'existence d'un procédé de fabrication de cartes à puces consistant à: partir d'un corps de carte déjà réalisé, dans lequel on usine une cavité, et ensuite à placer et à coller un module électronique dans la cavité.

La réalisation de ces logements et l'encartage s'effectuent actuellement à l'aide de différents dispositifs qui se distinguent par leur prix de revient, la quantité de cartes usinées à l'heure et la qualité du produit fini.

Les dispositifs connus à ce jour sont toutefois d'un encombrement important et peuvent provoquer des bavures, lors de la pose de la colle, autour de la cavité prévue pour l'emplacement de la puce, et ils ne permettent en outre pas un fraisage rapide de plusieurs milliers de cartes par heure.

Le but de la présente invention est de remédier à ces inconvénients.

Ce but est atteint par le fait que le dispositif de fabrication de cartes à puces comporte un poste de fraisage d'alvéoles dans des lots de cartes en matière plastique associé à un poste d'encartage de circuits intégrés dans les dites alvéoles, et qu'il est caractérisé en ce que les dites cartes fraisées sont convoyées du poste de fraisage au poste d'encartage par un système de transfert permettant une adaptation aux différences de cadence des postes et différences de positionnement des cartes sur ces postes, les cartes fraisées étant convoyées par le système de transfert du poste de fraisage vers un magasin tampon du poste d'encartage absorbant les différences de cadence instantanée d'un poste à l'autre, le système de transfert comportant un ensemble de deux convoyeurs, un premier convoyeur horizontal à hauteur variable pour la mise en place des cartes dans le magasin du poste d'encartage en fonction du niveau de ces cartes dans le magasin et un second convoyeur à courroie plate extensible pour remédier aux différences de longueur dues aux différences de positions du convoyeur horizontal.

Selon une autre particularité, le poste de fraisage comporte un moyen de présentation d'au moins deux cartes sur un support plan devant autant de moyens de référencement fixes qu'il y a de cartes présentées simultanément par le moyen de présentation et autant de moyens d'usinage qu'il y a de cartes présentées simultanément par le moyen de présentation et autant de moyens d'usinage étant mobiles en translation horizontale dans un plan parallèle à celui du support des cartes (303) et, une fois positionnés au-dessus de la zone de fraisage, mobiles en translation verticale.

Selon une autre particularité, le poste d'encartage comporte un moyen de transport de cartes et un moyen de transport de circuits intégrés, lesdits moyens de transport se déplaçant selon des axes parallèles ; un moyen de rotation entre les moyens de transport ; un moyen de préhension des circuits intégrés acheminés sur film, ledit moyen de préhension étant placé sur la tangente du moyen de transport des circuits intégrés et du moyen de rotation ; un moyen de positionnement des circuits intégrés dans les logements fraisés des cartes, ledit moyen de positionnement étant positionné à la tangente du moyen de rotation et du moyen de transport de cartes ; un moyen de pose de colle dans las logements fraisées positionné sur le moyen de transport des cartes en amont du moyen de positionnement ; et un moyen de pression sur les circuits intégrés positionné sur le moyen de transport des cartes en aval du moyen de positionnement.

Selon une autre particularité, le moyen de présentation du poste d'usinage comprend un dépileur, une courroie secondaire, le dépileur transférant les cartes de la courroie d'entrée et une courroie secondaire, laquelle effectue des pas autant de fois plus grands que les pas de la courroie d'entrée qu'il y a de cartes transférées simultanément par l'ascenseur.

Selon une autre particularité, le dispositif comporte une courroie de sortie et un descenseur transférant simultanément, de la courroie secondaire à la courroie de sortie, autant de cartes que l'ascenseur.

Selon une autre particularité, les courroies portent des taquets destinés au maintien des cartes.

Selon une autre particularité, le dispositif comporte en outre des moyens de référencement mobiles adaptés à serrer les cartes contre les moyens de référencement fixes.

Selon une autre particularité, le moyen de préhension du poste d'encartage comporte un moyen de pression et un moyen d'aspiration.

Selon une autre particularité, le moyen de positionnement comporte des ergots mobiles dans des rainures en arc de cercle.

Selon une autre particularité, le moyen de pose de colle est associé à un moyen de positionnement.

Selon une autre particularité, le moyen de transport de cartes est constitué d'une courroie crantée munie de taquets.

Selon une autre particularité, les moyens de transport sont reliés par au moins un moto-réducteur synchronisant leurs déplacements.

Cette disposition caractéristique permet d'usiner simultanément et d'encadrer les cartes avec une grande précision et dans un espace réduit.

La description qui va suivre, faite au regard des dessins annexés dans un but explicatif et nullement limitatif, permettra de mieux comprendre les avantages, buts et caractéristiques de la présente invention.
- la figure 1 représente une vue schématique latérale d'un dispositif selon l'invention ;
- la figure 2a représente une vue latérale du convoyeur extensible ;
- la figure 2b représente une vue de détail du système de guidage du convoyeur extensible ;
- la figure 3a représente une vue de dessus du poste de fraisage d'un dispositif selon l'invention ;
- la figure 3b représente une vue latérale détaillée d'un taquet du même poste de fraisage ;
- la figure 4a représente une vue de dessus détaillée d'un taquet du même poste de fraisage ;
- la figure 4b représente une vue de détail latérale du taquet présenté à la figure 4a ;
- la figure 5a représente une vue de détail latérale d'un moyen de référencement et d'un moyen d'usinage ;
- la figure 5b représente une vue de détail latérale des mêmes moyens de référencement et d'usinage ;
- la figure 6a représente une vue latérale en coupe du poste d'encartage d'un dispositif selon l'invention ;
- la figure 6b représente une vue de dessus du même poste d'encartage
- la figure 7a représente une vue de détail, vue de dessus, d'un moyen de positionnement ;
- la figure 7b représente une vue de détail, latérale et en coupe, du même moyen de positionnement.

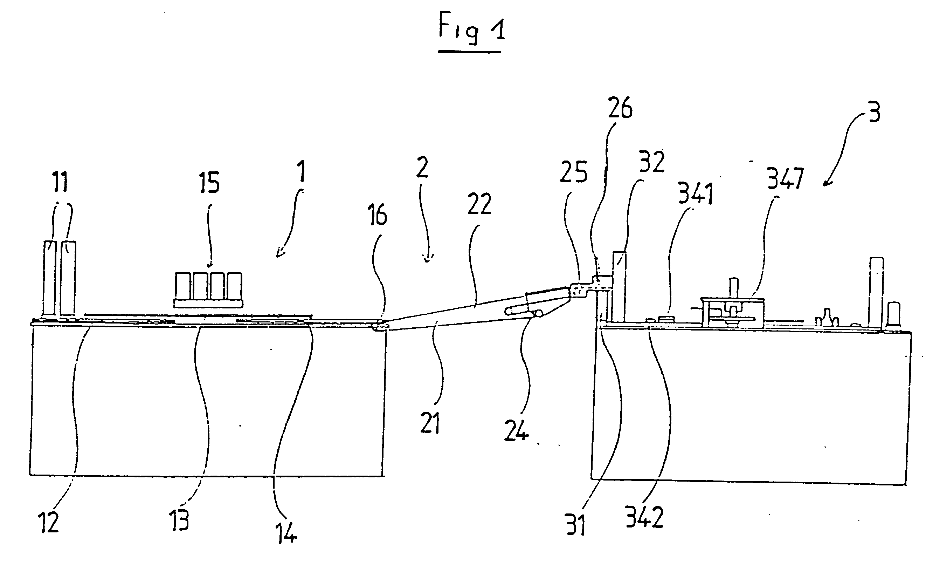

Sur la figure 1 on peut voir un dispositif selon l'invention comprenant un premier poste de travail, ou poste de fraisage (1) un système de transfert (2) de cartes usinées, un deuxième poste de travail, ou poste d'encartage (3).

Le poste de fraisage (1) comporte au moins un magasin (11) à cartes non usinées, trois courroies parallèles entre elles, à savoir une courroie d'entrée (12), une courroie secondaire (13) et une courroie de sortie (14), et un moyen de référencement et d'usinage (15).

Sur le poste d'encartage (3) on peut voir un système de guidage linéaire (31), un magasin tampon (32), un moyen de pose de colle (341) associé à un moyen de positionnement (342), un moyen de rotation (347).

Le système de transfert des cartes du poste (1) au poste (3) comprend un premier convoyeur (21) à courroie plate extensible (22) monté pivotant dans un plan vertical à l'une de ses extrémités autour d'un axe horizontal (16) solidaire du poste (1) et comportant à l'autre extrémité une glissière (23), non représentée sur la figure, coulissant sur une tige métallique et munie à sa base d'un galet (24) et à une de ses extrémités d'un axe horizontal (25) sur lequel est monté pivotant un deuxième convoyeur (26) constamment horizontal et mobile en translation verticale et monté à son extrémité sur un système de guidage linéaire (31) qui lui assure un positionnement constant dans le plan vertical, disposé en regard d'un magasin tampon (32) qui permet d'absorber les différences de cadences instantanées d'un poste à l'autre, l'ensemble des deux convoyeurs étant mobile en hauteur de manière à pouvoir s'ajuster en fonction du niveau des cartes dans le magasin (32).

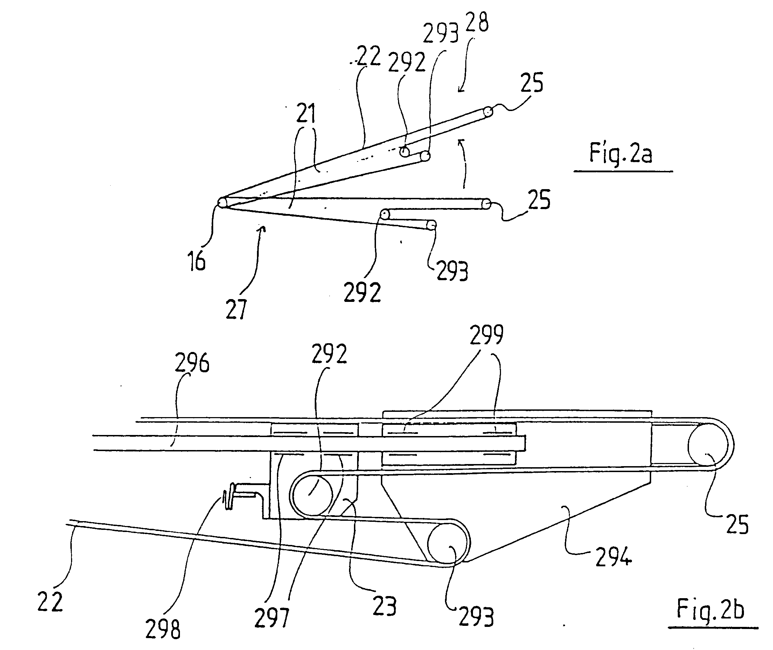

Sur la figure 2a on peut voir un convoyeur extensible (21) dans deux positions de travail, une position horizontale (27) et une position angulaire (28) dans laquelle la distance entre les deux axes (16) et (25) a augmenté par rapport à la première position, le brin conducteur (22) étant toujours dans la même longueur, le passage d'une position à l'autre sur une même droite imaginaire représentée par des traits pointillés de l'axe (25) étant réalisable grâce à un système comportant deux glissières, non représentées, et deux galets (292, 293), ce système de variation permettant au deuxième convoyeur (26) solidaire de l'axe (25) de rester constamment sur la même trajectoire verticale et dans un plan horizontal au cours du mouvement.

Sur la figure 2b on peut voir en détail le système permettant d'adapter la longueur entre les axes (16, 25) aux différentes positions du convoyeur horizontal (26), non représenté sur la figure.

Le système comprend deux glissières (23; 294) comportant chacune à sa base un galet, respectivement (292) et (293), en rotation libre.

Un ressort de tension (298) est fixé d'une part à l'une des ses extrémités sur la glissière (23) et d'autre part à l'autre extrémité sur l'axe (16), et la glissière (294) est montée pivotante autour de l'axe (25) à son extrémité opposée à celle en regard de la glissière (23).

Les deux glissières (23) et (294) sont reliées entre elles par la courroie (22) tendue en S autour des deux galets (292) et (293).

Afin de maintenir constante la tension de la courroie (22) en tout point du convoyeur (21) lors de son passage d'une position faisant un certain angle avec le sol à une position d'angle supérieur, la distance entre les deux galets (292, 293) doit varier pour compenser le gain en longueur entre les deux axes (16, 25), ce qui est réalisable grâce aux deux glissières (23, 294) qui peuvent se déplacer en translation sur une tige métallique (296), parallèle à la face supérieure du convoyeur (21), à l'aide de guidages à billes (297, 299) en tirant sur le ressort (298) qui joue le rôle de réserve-tampon de la courroie (22).

Inversement, lorsque le convoyeur passe d'une position faisant un certain angle avec le sol à un angle inférieur, la longueur entre les axes (16, 25) diminue et la courroie reste tendue grâce à l'augmentation de longueur entre les galets (292, 293) due à la force exercée par le ressort (298).

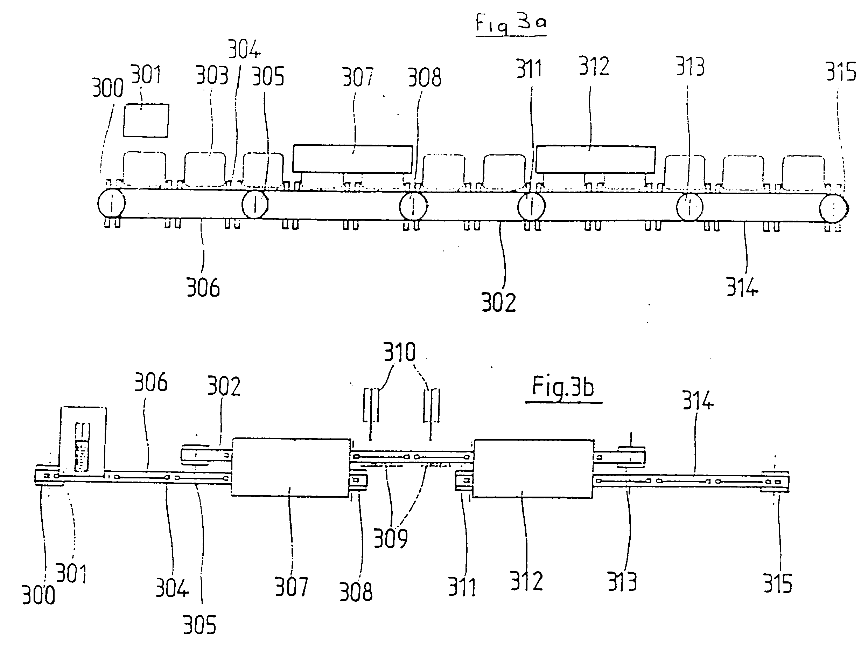

Dans les figures 3a et 3b sont représentés une poulie (300), un dépileur (301), une courroie secondaire (302), des cartes (303), des taquets (304), une poulie (305), une courroie d'entrée (306), un ascenseur (307), une poulie (308), une poulie (311), un descenseur (312), une poulie (313), une courroie de sortie (314) et une poulie (315).

Les poulies (300) et (308) portent la courroie d'entrée (306), les poulies (305) et (313) portent la courroie de sortie (314). Les poulies (300, 305, 308, 311, 313, 315) de type connu, par exemple à dents, sont parallèles entre elles et entraînées par des moteurs, non représentés. Les courroies (302, 306, 314) sont parallèles entre elles, sont crantées et portent des taquets (304). Les moteurs n'entraînent pas simultanément les poulies, ni avec des pas identiques. Le mode de fonctionnement de ces moteurs est présenté plus loin, en figure 3b.

Le dépileur (301), dont seul le magasin est représenté, est de type connu et adapté à placer une par une les cartes conservées dans son magasin entre deux taquets (304) successifs de la courroie d'entrée (306).

Les cartes (303) sont en matière plastique et de type connu.

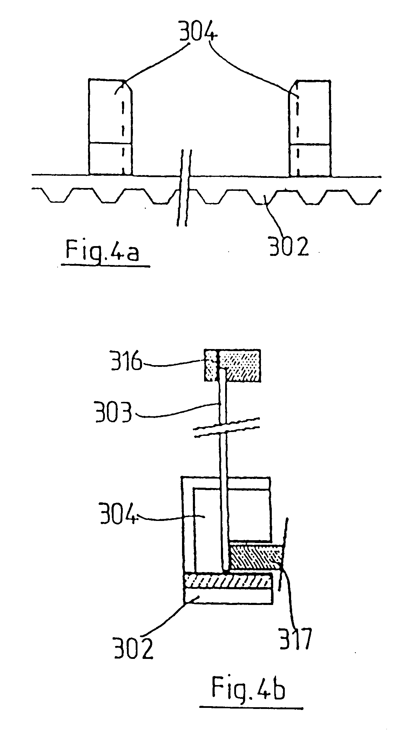

Les taquets (304), présentés en regard des figures 4a et 4b, sont adaptés à maintenir les cartes (303) au cours de leur déplacement.

L'ascenseur (307) est adapté à transférer plusieurs cartes (303) simultanément de leur position entre les taquets (304) de la courroie d'entrée (306) à une position identique entre les taquets (304) de la courroie secondaire (302).

Le descenseur (312) est adapté à transférer plusieurs cartes simultanément de leur position entre les taquets (304) de la courroie secondaire (302) à une position identique entre les taquets (304) de la courroie de sortie (314).

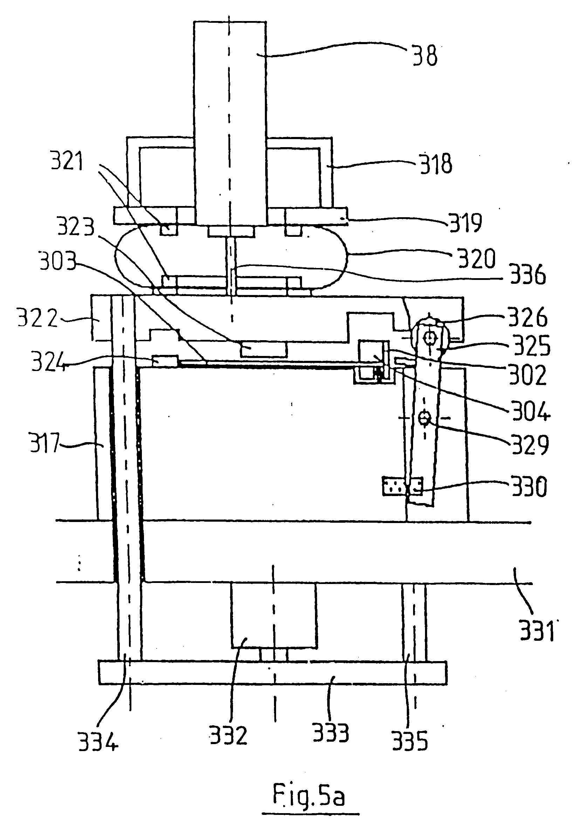

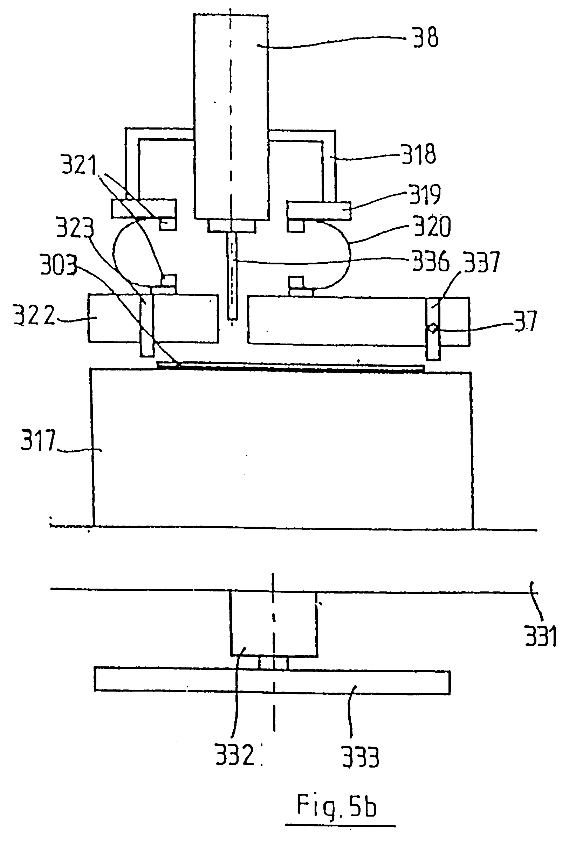

On voit également sur la figure 3b des moyens de référencement (309) et des moyens d'usinage (310), qui sont présentés en regard des figures 5a et 5b. Les moyens de référencement (309) sont à poste fixe. Les moyens d'usinage (310) ne sont mobiles que simultanément, dans un plan parallèle aux cartes (303) pour leur positionnement au-dessus de la cavité à usiner, et selon un axe perpendiculaire aux cartes (303) pour le fraisage des cavités.

Les moyens de référencement (309) et les moyens d'usinage (310) agissent sur des cartes (303) placées sur la courroie secondaire (302).

Le dispositif selon l'invention fonctionne selon le séquencement suivant :

Le dépileur (301) positionne une carte (303) entre les taquets (304) de la courroie d'entrée (306) à chaque pas de la courroie d'entrée (306), ce pas étant égal à la distance entre deux couples successifs de taquets (304).

Lorsque deux cartes (303) sont entrées dans l'ascenseur (307) et que deux ensembles de deux taquets (304) libres sur la courroie secondaire (302) sont faces à l'ascenseur (307), celui-ci transfère les deux cartes sur la courroie secondaire (302).

La courroie secondaire (302) avance avec des pas de longueur double de ceux de la courroie d'entrée (306), de telle manière que deux cartes non usinées sont présentées simultanément devant les moyens de référencement (309) et les moyens d'usinage (310). Ces deux cartes sont référencées simultanément par les moyens de référencement (309) et sont usinées simultanément par les moyens d'usinage (310) puis déplacées simultanément dans le descenseur (312).

Le dépileur (301), la courroie d'entrée (306), l'ascenseur (307) et la courroie secondaire (302) constituent un moyen de présentation de deux cartes (303) devant les moyens de référencement (309)

Le descenseur (312) les transfère simultanément sur la courroie de sortie (314) qui avance selon le même cadencement et les mêmes pas que la courroie d'entrée (306).

Dans les figures 3a et 3b, pour des raisons de clarté de dessin, seulement deux cartes (303) sont transférées simultanément par l'ascenseur (307) ou par le descenseur (312). Cependant ce nombre est préférentiellement supérieur à 2 pour que les avantages de l'invention soient utilisés au mieux.

Par exemple, pour l'usinage simultané de trois cartes (303), l'ascenseur (307) et le descenseur (312) transfèrent simultanément trois cartes (303), trois moyens de référencement (309) sont utilisés ainsi que trois moyens d'usinage (310). Les pas de la courroie secondaire sont alors triples des pas de la courroie d'entrée (306) et de la courroie de sortie (314).

Il est important de noter que les systèmes de contrôle optique ou physique des cartes (303) peuvent êtres combinés au dispositif présenté en figure 3a et 3b. Ces systèmes seront alors préférentiellement positionnés en face de la courroie de sortie (314).

Dans la figure 4a sont représentés deux taquets (304) placés sur la courroie secondaire (302) et dans la figure 4b la courroie secondaire (302), un taquet (304), un rail (316), une carte (303) et un moyen de référencement inférieur (317).

Les taquets (304) ont une forme générale en "L" dont le grand côté se trouve à l'opposé de son appui sur la courroie secondaire (302).

Le rail (316) enserre à sa partie supérieure la carte (303), qui est en appui latéral sur deux taquets (304) successifs. Enfin, le moyen de référencement inférieur (317) sert d'appui à la carte (303). Pendant les déplacements de la courroie secondaire (302), le rail (316) et le moyen de référencement inférieur (317) sont immobiles.

Dans la figure 5a sont représentés une broche (38), une cavité cylindrique (318), un support de soufflet (319), un soufflet (320), des rondelles (321), un presse-flan (322), un moyen de référencement latéral fixe (323), une butée (324), un moyen de référencement inférieur (317), une carte (303), la courroie secondaire (302), un taquet (304), un longeron mobile (325), une roue (326), un axe de rotation (329), un ressort (330), un support (331), un vérin de serrage (332), une pièce de raccordement (333), deux axes glissants (334, 335).

La broche (38), la cavité cylindrique (318), le support de soufflet (319), le soufflet (320) et les rondelles (321) présentent chacun une symétrie de révolution et sont co-axiaux.

Les rondelles (321) lient le soufflet (320) d'une part au support de soufflet (319) et d'autre part au presse-flan (322).

Les axes glissants (334) et (335) lient de manière rigide le presse-flan (322) et la pièce de raccordement (333) et coulissent dans le moyen de référencement inférieur (317). La pièce de raccordement (333) lie la tête du vérin (332) aux axes glissants (334, 335).

La broche (38) est de type connu et porte une fraise (336). Elle est immobile verticalement et horizontalement.

La cavité (318) porte un raccordement d'aspiration non représenté. L'aspiration à travers la cavité (318) permet aussi bien le refroidissement de la broche (38) que l'aspiration des copeaux d'usinage.

Le support de soufflet (319) est adapté à laisser passer l'air entre le soufflet (320) et la cavité (318).

Le soufflet (320), réalisé en matière souple, permet un déplacement de la broche (38) indépendamment du déplacement du presse-flan (322).

Les rondelles (321) sont adaptées à fixer de manière étanche le soufflet (320) d'une part sur le support de soufflet (319) et d'autre part sur le presse-flan (322).

Le presse-flan (322) comporte des échancrures adaptées à laisser pénétrer la butée (324), la courroie secondaire (302) et le taquet (304). Le presse-flan (322) comporte, en face de la roue (326) une face de roulement oblique, de telle manière que lorsque la roue (326) dépasse sur la partie supérieure du presse-flan (322), elle est placée plus à gauche que lorsqu'elle ne dépasse pas.

Le moyen de référencement latéral fixe (323) est présenté en regard de la figure 5b.

La butée (324) est fixée sur le moyen de référencement inférieur (317) qui comporte des échancrures pour le passage du taquet (304), de la courroie secondaire (302) et du ressort (330), et porte l'axe de rotation (329).

Le longeron mobile (325) porte, à sa partie supérieure, l'axe de rotation de la roue (326). Il est mobile autour de l'axe de rotation (329) et reçoit, sur sa partie inférieure, un des appuis du ressort (330). Il porte en outre un moyen de référencement mobile (337), visible sur la figure 5b; constitué d'une plaque perpendiculaire à l'axe du longeron, plaque adaptée à faire appui sur la courroie secondaire (302).

Le ressort (330) travaille en compression entre une échancrure du moyen de référencement inférieur (317) et le longeron mobile (325).

Le support (319) porte deux ensembles identiques tels que celui présenté en figures 5a et 5b.

Le vérin de serrage (332) est de type connu. Son extension provoque le serrage du presse-flan (322) contre la carte (303), la rotation de la roue (326) sur la face de roulement du presse-flan (322) et son déplacement vers la gauche et l'appui du moyen de référencement mobile (337) sur la courroie secondaire (302).

Dans la figure 5b on retrouve la broche (38), la cavité cylindrique (318), le support de soufflet (319), le soufflet (320) les rondelles (321), le presse-flan (322), le moyen de référencement latéral fixe (323), le moyen de référencement inférieur (317), une carte (303), le support (331), le vérin de serrage (332) la pièce de raccordement (333), une fraise (336), un moyen de référencement latéral (337) mobile en rotation autour d'un axe (37).

Le moyen de référencement latéral fixe (323) est fixé au presse-flan (322), de même que l'axe de rotation (329). Lorsque le presse-flan (322) s'approche de la carte (303) et vient la toucher, le moyen de référencement latéral mobile (337) se déplace en serrant la carte (303) contre le moyen de référencement latéral fixe (323).

L'extension du vérin de serrage (332) permet ainsi le calage de la carte (303) et son blocage dans une position référencée de manière fixe.

Après l'extension du vérin de serrage (332), la broche (38) est déplacée vers la carte (303) et la fraise (336) réalise un fraisage destiné à recevoir un composant électronique.

Les moyens de référencement fixes sont constitués du moyen de référencement inférieur (317), de la butée (324) et du moyen de référencement latéral fixe (323).

Les moyens de référencement mobiles sont constitués du longeron (325), du moyen de référencement latéral mobile (337) et du presse-flan (322). Ils sont adaptés à serrer les cartes (303) contre les moyens de référencement fixes.

Les moyens d'usinage sont constitués des broches (38) et des fraises (336).

Plusieurs moyens de référencement et plusieurs moyens d'usinage étant liés au support (331), plusieurs cartes (303) sont usinées simultanément avec une haute précision de référencement.

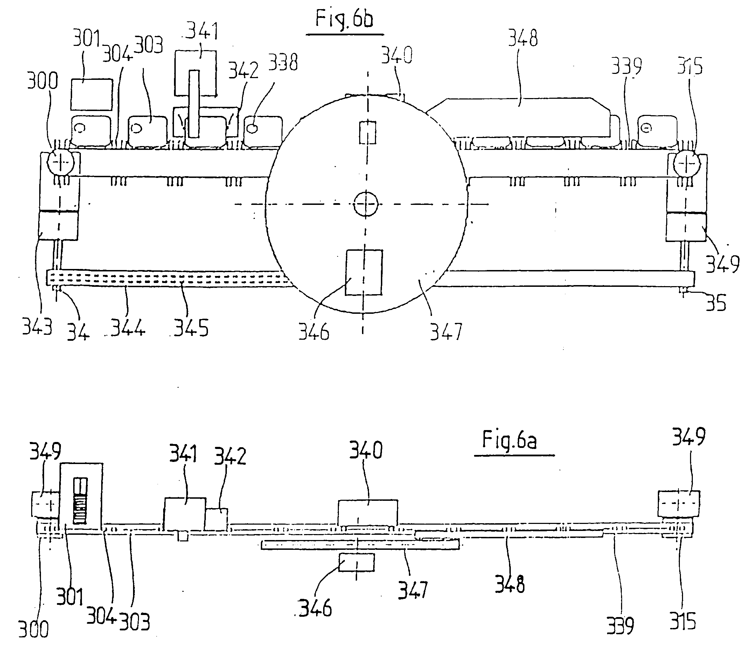

Dans la figure 6a sont représentés une poulie (300), un dépileur (301), des cartes (303) portant des fraisages (338), des taquets (304), un moyen de transport de cartes (339), un moyen de positionnement (340), une poulie (315), un moyen de pose de colle (341),un moyen de positionnement (342) associé au moyen de pose de colle (341), un moto réducteur (343) portant un axe de sortie (34), un moyen de transport (344) de circuits intégrés (345), un moyen de préhension (346), un moyen de rotation (347), un moyen de pression (348) et un moto-réducteur (349) portant un axe de sortie (35).

Les poulies (300) et (315) portent le moyen de transport de cartes (339) et sont de type connu, par exemple à dents parallèles entre elles et entraînées par moteurs. Le moyen de transport de cartes (339) est, par exemple, une courroie crantée.

Les moyens de transport (339) et (344) déplacent selon des axes parallèles, respectivement les cartes (303) et les circuits intégrés (345).

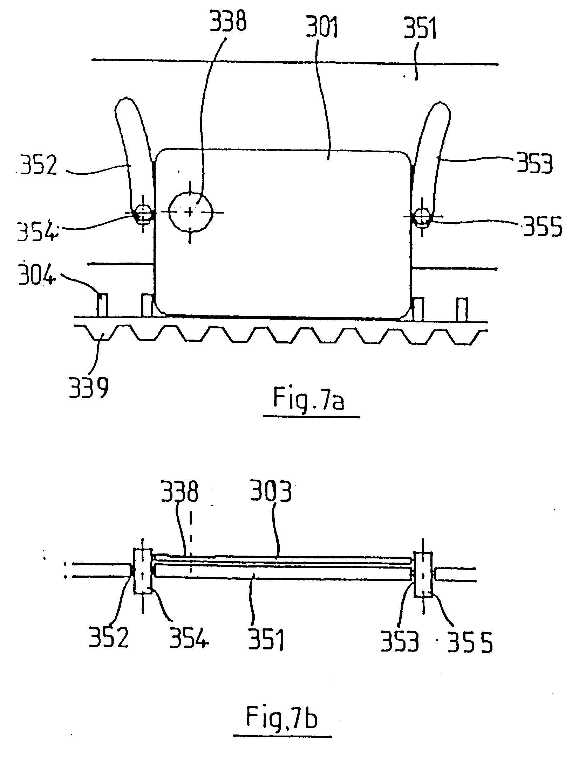

Le moyen de positionnement est présenté en regard des figures 7a et 7b.

Le moyen de pose de colle (341) est de type connu. Il comporte un bras et est adapté à déposer dans les fraisages (338) des quantités de colle constantes. Il est associé à un moyen de positionnement (342) identique au moyen de positionnement (340).

Les deux moto-réducteurs (343, 349) sont identiques et donnent, conjointement, au moyen de transport (344) un mouvement de plus faible amplitude que celui du moyen de transport (339), mais de manière synchronisée. Ils portent respectivement les axes lents (34, 35) et des axes rapides, non représentés, reliés au moyen de transport de cartes (339).

Le moyen de transport de circuits intégrés (344) est préférentiellement en matière plastique muni d'encoches d'entraînement.

Le moyen de préhension (346) est adapté à positionner sur le moyen de rotation (347) un circuit intégré (345) qu'il prélève sur le moyen de transport (344). Il est de type connu comportant, par exemple, un actionneur effectuant une poussée sur le circuit intégré de bas en haut et une tête aspirante tenant le circuit intégrés (345) pendant la rotation du moyen de rotation (347), tangent aux moyens de transport (339, 344), et adapté à présenter devant le moyen de positionnement (340) les circuits intégrés (345) que lui a fournis le moyen de préhension (346).

Le moyen de préhension (346) est donc sur la tangente du moyen de rotation (347) et du moyen de transport (344). De même, le moyen de positionnement (340) est à la tangente du moyen de rotation (347) et du moyen de transport (339).

Sur le cheminement du moyen de transport (339), le moyen de pose de colle (341) est en amont du moyen de positionnement (340) et le moyen de pression (348) en aval de ce même moyen de positionnement (340).

Le moyen de positionnement (340) est adapté à présenter la carte (303) en face du circuit intégré présenté par le moyen de rotation (347).

Le moyen de pression (348) est adapté à effectuer une pression sur les circuits intégrés présents sur les cartes (303) en sortie du moyen de positionnement (340) pendant une durée supérieure à la durée de séchage ou de polymérisation de la colle. Il est de type connu, par exemple constitué d'une glissière d'écartement adapté.

Dans la figure 6b on retrouve la poulie (300), le dépileur (301), les cartes (303), les taquets (304), le moyen de transport (339), la poulie (315), le moyen de pose de colle (341) associé au moyen de positionnement (342), le moto-réducteur (343), le moyen de préhension (346), le moyen de rotation (347), le moyen de pression (348) et le moto-réducteur (349).

Le dispositif selon l'invention fonctionne selon le séquencement suivant :

Le dépileur (301) positionne une carte (303) entre les taquets (304 du moyen de transport (339) à chacun de ses pas. Ce pas est égal à la distance entre deux ensembles successifs de deux taquets.

A chaque pas, le moyen de transport de cartes (339) présente une carte (303) devant le moyen de pose de colle (341) associé au moyen de positionnement (342), devant le moyen de positionnement (340), en entrée et sortie du moyen de pression (348).

A chaque pas, le moyen de transport (344) présente un circuit intégré (345) devant le moyen de préhension (346), le moyen de rotation (347) effectue une rotation d'un demi-tour et présente un circuit intégré devant le moyen de positionnement (340), le moyen de pose de colle (341) dépose une quantité prédéterminée de colle dans le fraisage (338) d'une carte (303), le moyen de positionnement (340) permettant le positionnement d'un circuit intégré dans un fraisage (338) enduit de colle.

Chaque carte (303) reçoit donc successivement, au cours du déplacement du moyen de transport (339), une dose de colle, un circuit intégré (345) et une pression sur ce circuit (345).

Il est important de noter que des systèmes de contrôle optiques, électriques, magnétiques ou physiques des cartes (303) peuvent être combinés au dispositif présenté en figures 6a et 6b, ces systèmes étant alors positionnés selon leur fonction.

Par exemple, le test d'un circuit intégré avant le positionnement sur la carte (303) peut être placé sur le moyen de transport (344) ou sur le moyen de rotation (347). Le test électrique des cartes (303) peut être placé sur la sortie du dispositif. La vérification optique des caractéristiques dimensionnelles de la carte (303) peut être placée en amont du moyen de pose de colle (341).

Selon une variante, le moyen de transport de circuits intégrés (345) porte deux rangées de circuits intégrés (345). Dans ce cas, le moyen de transport (344) effectue deux fois moins de pas que le moyen de transport (339) et le moyen de préhension (346) est adapté à prendre les circuits intégrés (345) sur les deux rangées.

Sur la figure 7a on peut voir le moyen de transport (339) portant les taquets (304), une carte (303) portant un fraisage (338) et un support (351), par exemple en métal, comportant deux rainures (352), 353), deux ergots (354, 355) se trouvant dans les rainures (352, 353).

Les deux rainures (352, 353) ont des formes en arc de cercle et leur espacement minimal est légèrement inférieur à la longueur d'une carte (303). Leur largeur est constante sur l'arc de cercle. La rainure (352), placée à gauche de la carte (303), possède un centre d'arc de cercle sur sa droite. Les parties hautes des rainures (352; 353) dépassent largement la hauteur de la carte (303). Les parties basses des rainures (352, 353) forment des tangentes de la cartes (303).

Les ergots (354, 355) sont de forme cylindrique et possèdent un diamètre légèrement inférieur à la largeur des rainures (352, 353). Ils sont mus par des systèmes mécaniques, non représentés, adaptés à les déplacer de bas en haut dans les rainures (352, 353, selon les arcs de cercle.

Les ergots (354, 355) sont dans la partie haute des rainures (352, 353) pendant le déplacement du moyen de transport (339) et des cartes (303). Le moyen de transport (339) s'arrête approximativement dans la position décrite en figure 7a. Les ergots (354, 355) sont alors déplacés vers la partie basse des rainures (352, 353) et bloquent latéralement la carte (303) dans une position parfaitement référencée.

La figure 7b correspond à la section de la figure 7a, selon un plan passant par les axes des ergots (354, 355). On y voit une carte (303) portant un fraisage (338), le support (351), les rainures (352, 353) et les ergots (354, 355).

Il va de soi que la présente invention ne saurait être limitée à la description qui précède de certains de ses modes de réalisation, susceptibles de subir des modifications, sans pour autant sortir du cadre de l'invention.

## Revendications

1. Dispositif de fabrication de cartes à puces, comportant un poste de fraisage (1) d'alvéoles dans des lots de cartes en matière plastique associé à un poste d'encartage (3) de circuits intégrés dans les dites alvéoles, caractérisé en ce que les dites cartes fraisées sont convoyées du poste de fraisage (1) au poste d'encartage (3) par un système de transfert (2) permettant une adaptation aux différences de cadence des postes (1, 3) et aux différences de positionnement des cartes sur ces postes (1, 3), les cartes fraisées étant convoyées par le système de transfert (2) du poste de fraisage vers un magasin (32) tampon du poste d'encartage (3) absorbant les différences de cadence instantanée d'un poste à l'autre, le système de transfert (2) comportant un ensemble de deux convoyeurs, un premier convoyeur horizontal (26) à hauteur variable pour la mise en place des cartes (303) dans le magasin (32) du poste d'encartage (3) en fonction du niveau de ces cartes (303) dans le magasin (32) et un second convoyeur(21) à courroie plate extensible (22) pour remédier aux différences de longueur dues aux différences de positions du convoyeur horizontal (26).

2. Dispositif de fabrication selon la revendication 1, caractérisé en ce que le poste de fraisage comporte un moyen de présentation d'au moins deux cartes (303) sur un support plan devant autant de moyens de référencement fixes qu'il y a de cartes présentées simultanément par le moyen de présentation et autant de moyens d'usinage (310) qu'il y a de cartes présentées simultanément par le moyen de présentation et autant de moyens d'usinage étant mobiles en translation horizontale dans un plan parallèle à celui du support des cartes (303) et, une fois positionnés au-dessus de la zone de fraisage, mobiles en translation verticale.

3. Dispositif de fabrication selon la revendication 1 ou 2, caractérisé en ce que le poste d'encartage comporte un moyen de transport de cartes (339) et un moyen de transport (344) de circuits intégrés (345), lesdits moyens de transport (339, 344) se déplaçant selon des axes parallèles ; un moyen de rotation (347) entre les moyens de transport (339, 344) ; un moyen de préhension (346) des circuits intégrés (345) acheminés sur film, ledit moyen de préhension (346) étant placé sur la tangente du moyen de transport (344) des circuits intégrés (345) et du moyen de rotation (347) ; un moyen de positionnement (340) des circuits intégrés (345) dans les logements fraisés des cartes (303), ledit moyen de positionnement (340) étant positionné à la tangente du moyen de rotation (347) et du moyen de transport de cartes (339) ; un moyen de pose de colle (341) dans las logements fraisées positionné sur le moyen de transport des cartes (339) en amont du moyen de positionnement (340) ; et un moyen de pression (348) sur les circuits intégrés (345) positionné sur le moyen de transport des cartes (339) en aval du moyen de positionnement (340).

4. Dispositif selon une des revendications 1 à 3, caractérisé en ce que le moyen de présentation du poste d'usinage (1) comprend un dépileur (301), une courroie secondaire (302), le dépileur (301) transférant les cartes (303) de la courroie d'entrée (306) et une courroie secondaire (302), laquelle effectue des pas autant de fois plus grands que les pas de la courroie d'entrée (306) qu'il y a de cartes transférées simultanément par l'ascenseur (307).

5. Dispositif selon la revendication 4, caractérisé en ce qu'il comporte une courroie de sortie (314) et un descenseur (312) transférant simultanément, de la courroie secondaire (302) à la courroie de sortie (306), autant de cartes que l'ascenseur (307).

6. Dispositif selon la revendication 4 ou 5, caractérisé en ce que les courroies (302, 306, 314) portent des taquets (304) destinés au maintien des cartes (303).

7. Dispositif selon une des revendications 4 à 6, caractérisé en ce qu'il comporte en outre des moyens de référencement mobiles (317, 337) adaptés à serrer les cartes (303) contre les moyens de référencement fixes (309, 323).

8. Dispositif selon la revendication 1, caractérisé en ce que le moyen de préhension (346) du poste d'encartage (3) comporte un moyen de pression et un moyen d'aspiration.

9. Dispositif selon la revendication 1 ou 8, caractérisé en ce que le moyen de positionnement (340) comporte des ergots (354, 255) mobiles dans des rainures (352, 353) en arc de cercle.

10. Dispositif selon une des revendication 1, 8, 9, caractérisé en ce que le moyen de pose de colle (341) est associé à un moyen de positionnement (342).

11. Dispositif selon une des revendication 1, 8, 9 ou 10, caractérisé en ce que le moyen de transport de cartes (339) est constitué d'une courroie crantée munie de taquets (304).

12. Dispositif selon une des revendication 1, 8, 9, 10, 11, caractérisé en ce que les moyens de transport(339, 344) sont reliés par au moins un motoréducteur (343, 349) synchronisant leurs déplacements.

## Claims

1. Device for manufacturing smart cards comprising a station (1) for milling recesses in batches of cards made of plastic material in association with a station (3) for insetting integrated circuits in said recesses, characterised in that said milled cards are conveyed from the milling station (1) to the insetting station (3) by a transfer system (2) permitting adaptation to the differences in speed of the stations (1, 3) and the differences in positioning of the cards on these stations (1, 3), the milled cards being conveyed by the transfer system (2) from the milling station to a buffer store (32) for the insetting station (3) absorbing the differences in speed at any moment in time between one station and another, the transfer system (2) comprising an assembly of two conveyors, a first horizontal variable-height conveyor (26) for positioning the cards (303) in the store (32) of the insetting station (3) depending on the level of the cards (303) in the store (32) and a second conveyor (21) with an extensible flat belt (22) in order to remedy the differences in length arising from the differences in position of the horizontal conveyor (26).

2. Manufacturing device according to Claim 1, characterised in that the milling station comprises a means for presenting at least two cards (303) on a flat support in front of the same number of fixed referencing means as there are cards presented simultaneously by the presentation means and the same number of machining means (310) as there are cards presented simultaneously by the presentation means and the same number of machining means being mobile in horizontal translation in a plane parallel to that of the support for the cards (303) and, once positioned above the milling zone, mobile in vertical translation.

3. Manufacturing device according to Claim 1 or 2, characterised in that the insetting station comprises a card transport means (339) and a transport means (344) for integrated circuits (345), said transport means (339, 344) being displaced along parallel axes; a rotation means (347) between the transport means (339, 344); a means (346) for grasping the integrated circuits (345) being conveyed on film, said grasping means (346) being placed at the tangent between the transport means (344) for the integrated circuits (345) and the rotation means (347); a means (340) for positioning the integrated circuits (345) in the milled recesses of the cards (303), said positioning means (340) being positioned at the tangent between the rotation means (347) and the card transport means (339); a means for depositing glue (341) in the milled recesses, said means (341) being positioned on the card transport means (339) upstream of the positioning means (340); and a means (348) for applying pressure on the integrated circuits (345), said means (348) being positioned on the card transport means (339) downstream from the positioning means (340).

4. Device according to one of Claims 1 to 3, characterised in that the presentation means of the machining station (1) comprises an extractor (301), a secondary belt (302), the extractor (301) transferring the cards (303) from the entry belt (306) and a secondary belt (302), which performs steps that are as many times greater than the steps of the entry belt (306) as there are cards transferred simultaneously by the elevator (307).

5. Device according to Claim 4, characterised in that it comprises an exit belt (314) and a lowering device (312) simultaneously transferring, from the secondary belt (302) to the exit belt (306), the same number of cards as the elevator (307).

6. Device according to Claim 4 or 5, characterised in that the belts (302, 306, 314) carry stops (304) intended for holding the cards (303).

7. Device according to one of Claims 4 to 6, characterised in that it also comprises mobile referencing means (317, 337) suitable for clamping the cards (303) against the fixed referencing means (309, 323).

8. Device according to Claim 1, characterised in that the grasping means (346) of the insetting station (3) comprises a pressure means and a suction means.

9. Device according to Claim 1 or 8, characterised in that the positioning means (340) comprises lugs (354, 255) movable within grooves (352, 353) shaped as an arc of a circle.

10. Device according to one of Claims 1, 8, 9, characterised in that the means for placing glue (341) is associated with a positioning means (342).

11. Device according to one of Claims 1, 8, 9 or 10, characterised in that the card transport means (339) is constituted by a notched belt provided with stops (304).

12. Device according to one of Claims 1, 8, 9, 10, 11, characterised in that the transport means (339, 344) are connected by at least one reduction geared motor (343, 349) synchronising their displacement.

## Patentansprüche

1. Vorrichtung zur Herstellung von Chipkarten, mit einer Station (1) zum Fräsen von Zellen in Losen von Kunststoffkarten, der eine Station (3) zum Einlegen integrierter Schaltungen in die Zellen zugeordnet ist, dadurch gekennzeichnet, daß die gefrästen Karten von der Frässtation (1) zur Einlegestation (3) durch ein Übertragungssystem (2) befördert werden, das eine Anpassung an Taktunterschiede der Stationen (1, 3) und an Positionierungsunterschiede der Karten in diesen Stationen (1, 3) ermöglicht, wobei die geträsten Karten durch das Übertragungssystem (2) von der Frässtation an ein Zwischenlagermagazin (32) der Einlegestation (3) befördert werden, das die Unterschiede des momentanen Takts von einer Station zur nächsten absorbiert, wobei das Übertragungssystem (2) eine Gesamtheit aus zwei Fördereinrichtungen umfaßt, eine erste horizontale Fördereinrichtung (26) mit variabler Höhe für die Anordnung der Karten (303) im Magazin (32) der Einlegestation (3) in Abhängigkeit von der Höhe dieser Karten (303) im Magazin (32) und eine zweite Fördereinrichtung (21) mit elastischem Flachriemen (22) für die Beseitigung von Längenunterschieden, die durch Positionsunterschiede der horizontalen Fördereinrichtung (26) bedingt sind.

2. Herstellungsvorrichtung nach Anspruch 1, dadurch gekennzeichnet, daß die Frässtation ein Mittel für die Anordnung wenigstens zweier Karten (303) auf einem ebenen Träger vor so vielen festen Bezugsmitteln, wie Karten vorhanden sind, die gleichzeitig durch das Anordnungsmittel angeordnet werden, und vor so vielen Bearbeitungsmitteln (310), wie Karten vorhanden sind, die gleichzeitig durch das Anordnungsmittel angeordnet werden, und vor ebenso vielen Bearbeitungsmitteln, die horizontal translatorisch in einer Ebene beweglich sind, die zu derjenigen des Trägers der Karten (303) parallel ist, und die, sobald sie über der Fräszone angeordnet sind, vertikal translatorisch beweglich sind.

3. Herstellungsvorrichtung nach Anspruch 1 oder 2, dadurch gekennzeichnet, daß die Einlegestation umfaßt: ein Transportmittel (339) für Karten und ein Transportmittel (344) für integrierte Schaltungen (345), wobei sich die Transportmittel (339, 344) längs paralleler Achsen verschieben; ein Drehmittel (347) zwischen den Transportmitteln (339, 344); ein Greifmittel (346) für integrierte Schaltungen (345), die auf einem Film zugeführt werden, wobei das Greitmittel (346) auf der Tangente des Transportmittels (344) für integrierte Schaltungen (345) und des Drehmittels (347) angeordnet ist; ein Positionierungsmittel (340) für integrierte Schaltungen (345) in den in den Karten (303) ausgefrästen Aufnahmesitzen, wobei das Positionierungsmittel (340) auf der Tangente des Drehmittels (347) und des Kartentransportmittels (339) angeordnet ist; ein Mittel (341) zum Anbringen von Klebstoff in den ausgefrästen Aufnahmesitzen, das auf dem Kartentransportmittel (339) auf der Einlaßseite der Positionierungsmittel (340) angeordnet ist; und ein Druckmittel (348), das auf die integrierten Schaltungen (345) wirkt und auf dem Kartentransportmittel (339) auf der Auslaßseite des Positionierungsmittels (340) angeordnet ist.

4. Vorrichtung nach einem der Ansprüche 1 bis 3, dadurch gekennzeichnet, daß die Anordnungsmittel der Bearbeitungsstation (1) einen Stapelabnehmer (301) und einen sekundären Riemen (302) umfaßt, wobei der Stapelabnehmer (301) die Karten (303) vom Eingangsriemen (306) und einem sekundären Riemen (302) befördert, wobei letzterer Schritte ausführt, die um soviel größer als die Schritte des Eingangsriemens (306) sind, wie Karten gleichzeitig von der Hebeeinrichtung (307) befördert werden.

5. Vorrichtung nach Anspruch 4, dadurch gekennzeichnet, daß sie einen Ausgangsriemen (314) und eine Absenkeinrichtung (312) umfaßt, die ebenso viele Karten wie die Hebeeinrichtung (307) gleichzeitig vom sekundären Riemen (302) zum Ausgangsriemen (306) befördert.

6. Vorrichtung nach Anspruch 4 oder 5, dadurch gekennzeichnet, daß die Riemen (302, 306, 314) Mitnehmer (304) tragen, die zum Halten der Karten (303) vorgesehen sind.

7. Vorrichtung nach einem der Ansprüche 4 bis 6, dadurch gekennzeichnet, daß sie außerdem bewegliche Bezugsmittel (317, 337) umfaßt, die so beschaffen sind, daß sie die Karten (303) gegen die festen Bezugsmittel (309, 323) klemmen.

8. Vorrichtung nach Anspruch 1, dadurch gekennzeichnet, daß die Greifmittel (346) der Einlegestation (3) ein Druckmittel und ein Saugmittel umfassen.

9. Vorrichtung nach Anspruch 1 oder 8, dadurch gekennzeichnet, daß die Positionierungsmittel (340) Vorsprünge (354, 255) aufweisen, die in kreisbogenförmigen Rinnen (352, 353) beweglich sind.

10. Vorrichtung nach einem der Ansprüche 1, 8, 9, dadurch gekennzeichnet, daß das Klebstoffaufbringmittel (341) einem Positionierungsmittel (342) zugeordnet ist.

11. Vorrichtung nach einem der Ansprüche 1, 8, 9 oder 10, dadurch gekennzeichnet, daß das Kartentransportmittel (339) aus einem mit Mitnehmern (304) versehenen Zahnriemen gebildet ist.

12. Vorrichtung nach einem der Ansprüche 1, 8, 9, 10, 11, dadurch gekennzeichnet, daß die Transportmittel (339, 344) durch wenigstens einen Getriebemotor (343, 349), der ihre Verschiebungen synchronisiert, verbunden sind.
